# EUROPEAN PATENT APPLICATION

(11) **EP 2 595 396 A2**
(43) Date of publication of application: **22.05.2013**
(21) Application number: 12189469.5
(22) Date of filing: 22.10.2012
(51) Int. Cl.: H04N 13/04

(54) **Glasses and method for pairing thereof**

(30) Priority: 21.11.2011 KR 20110121911
(71) Applicant: Samsung Electronics Co., Ltd, Gyeonggi-do 443-742 (KR)
(72) Inventor: Seo Je-hwan, Daegu (KR); Na, Moon-sung, Gyeonggi-do (KR); Yang, Geun-sam, Gyeonggi-do (KR); Lee, Sung-han, Gyeonggi-do (KR); Lee, Seung-bok, Gyeonggi-do (KR); Ha, Tae-hyeun, Gyeonggi-do (KR)
(74) Representative: Walaski, Jan Filip

(57) **Abstract**

Glasses and a method for pairing thereof are provided. The method includes: if a preset event occurs, determining whether a transmission packet for driving the glasses has been received from a display apparatus; and if the transmission packet is determined not to have been received, automatically performing a pairing of the glasses with the display apparatus.

## Description

This invention relates to glasses and a method for pairing thereof, and more particularly, to glasses which can operate with a 3D display apparatus to provide an image along with the display apparatus, and a method for pairing thereof.

Efforts to develop 3D display apparatuses have accelerated for a desire to enjoy a more realistic watching experience. As a result, a 3D image signal, which is mainly watched in a theatre, may be watched in a home using a general display apparatus such as a television (TV).

A shutter glass method has been recently used in a home TV and refers to a method by which shutters of glasses of 3D glasses are switched to open a left eye glass when a left eye image is output, and to open a right eye glass when a right eye image is output, in order to provide a 3D effect to a user.

According to the shutter glass method, a 3D display apparatus transmits a control signal for driving 3D glasses to the 3D glasses according to a fixed communication method.

A Bluetooth method is mainly used as a communication method between a 3D display apparatus and 3D glasses. In order to watch a 3D image through the 3D glasses using the Bluetooth method, a process of pairing the 3D glasses with the 3D display apparatus must be performed.

However, a fixed operation of a user (e.g., an operation of pressing a power button for a fixed time or more) is required to perform an existing pairing process. This causes inconvenience to the user.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiment provide glasses which automatically perform pairing with a display apparatus if a transmission packet for driving the glasses is not received, and a method for pairing thereof.

According to an aspect of an exemplary embodiment, there is provided a method for pairing of glasses, the method including: if a preset event occurs, determining whether a transmission packet for driving the glasses has been received from a display apparatus; and if the transmission packet is determined not to have been received, automatically performing a pairing of the glasses with the display apparatus.

The transmission packet may include timing information related to when shutters of the glasses are switched on or off.

The method may further include determining a standard time between the display apparatus and the glasses, wherein the timing information is delay information ranging from the standard time which is determined to exist between the 3D display apparatus and the 3D glasses 200 to a time when the shutters of the glasses are switched on or off.

The standard time determined between the 3D display apparatus and the 3D glasses may be based on vertical sync signals.

The preset event is an event to turn on power to the glasses.

The method may further include determining whether the transmission packet has been received for a preset time.

The method may further include: if the pairing is completed, receiving the transmission packet from the display apparatus to drive the shutters of the glasses.

The method may further include: if it is determined that the transmission packet has not been received, requesting the transmission packet from the display apparatus; and receiving the transmission packet for driving the glasses from the display apparatus in response to the request for the transmission packet to drive the shutters of the glasses.

The method may further include: acquiring a received signal strength indication (RSSI) from the display apparatus, wherein if the RSSI acquired from the display apparatus is smaller than a preset threshold value, automatically performing another pairing with another display apparatus.

The performing of the pairing may include: acquiring received signal strength indications (RSSIs) from a plurality of display apparatuses and automatically performing pairing with one of the plurality of display apparatuses having the largest RSSI.

According to an aspect of another exemplary embodiment, there is provided glasses including: a communicator which, if a preset event occurs, receives a transmission packet for driving the glasses from a display apparatus; and a controller which, if the transmission packet is not received, controls the communicator to automatically perform pairing of the glasses with the display apparatus.

The transmission packet may include timing information related to when shutters of the glasses are switched on or off.

The timing information may include delay information ranging from a standard time, which is determined between the display apparatus and the glasses, to a time when the shutters of the glasses are switched on or off.

The preset event may include an event to turn on power to the glasses.

The controller may control the communicator to determine whether the transmission packet has been received for a preset time and, if the transmission packet is not received, automatically perform the pairing of the glasses with the display apparatus.

If the pairing is completed, the controller may receive the transmission packet from the display apparatus to drive the shutters of the glasses.

If the transmission packet is not received, the controller may: control the communicator to request the transmission packet from the display apparatus, and receive the transmission packet for driving the glasses from the display apparatus in response to the request for the transmission packet to drive the shutters of the glasses. If a received signal strength indication (RSSI) acquired from the display apparatus is smaller than a preset threshold value, the controller may control the communicator to automatically perform another pairing with another display apparatus.

The controller may control the communicator to acquire RSSIs from a plurality of display apparatuses and automatically perform pairing with one of the plurality of display apparatuses having the largest RSSI.

According to an aspect of another exemplary embodiment, there is provided a method of controlling glasses, the method including: searching for a display apparatus within a communication range of the glasses; determining whether a previous pairing has occurred between the glasses and the display apparatus; and if the previous pairing is determined not to have occurred, automatically performing a new pairing of the glasses with the display apparatus.

The determining whether the previous pairing has occurred between the glasses and the display apparatus may include determining whether a transmission packet for the driving the glasses has not been received for a preset time.

The automatically performing the new pairing of the glasses with the display apparatus may include generating a personal identification number (PIN) code without a user's input to register the display apparatus with glasses.

The above and/or other aspects will be more apparent by describing in detail exemplary embodiments, with reference to the accompanying drawings, in which:
FIG. 1 is a view illustrating an image providing system according to an exemplary embodiment;
FIG. 2 is a block diagram illustrating a structure of 3D glasses according to an exemplary embodiment;
FIG. 3 is a block diagram illustrating a detailed structure of 3D glasses according to an exemplary embodiment;
FIG. 4 is a flowchart illustrating a method of performing pairing of 3D glasses according to an exemplary embodiment; an
FIG. 5 is a flowchart illustrating a method of performing pairing of 3D glasses in more detail according to an exemplary embodiment.

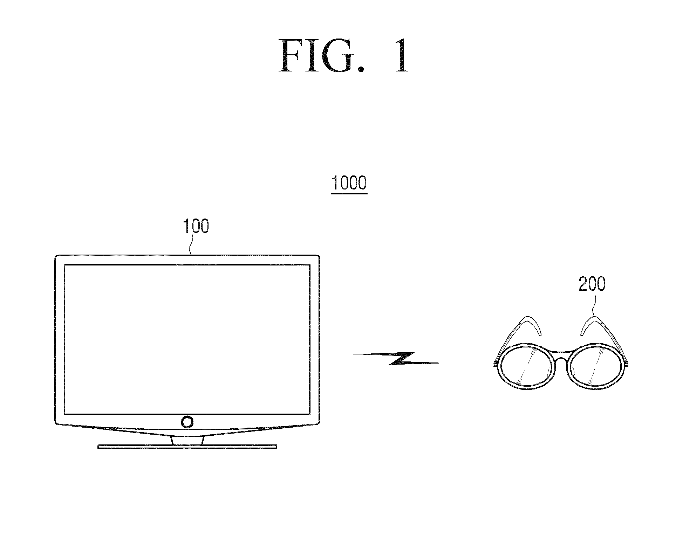

FIG. 1 is a view illustrating a image providing system 1000 according to an exemplary embodiment. Referring to FIG. 1, the image providing system 1000 includes a display apparatus 100 and glasses 200. Herein, according to an exemplary embodiment, the display apparatus 100 and the glasses 200 may be realized as a 3D display apparatus and 3D glasses, respectively, but are not limited thereto. However, in the exemplary embodiment, it is assumed that the display apparatus 100 and the glasses 200 are realized as a 3D display apparatus and a 3D glasses, respectively, for convenience of explanation.

The 3D display apparatus 100 receives a 3D image from a photographing apparatus such as a camera or the like, or a 3D image, which is captured by a camera and then edited/processed in a broadcasting station, and from the broadcasting station, processes the 3D image, and displays the processed 3D image on a screen.

In particular, the 3D display apparatus 100 processes left and right eye images with reference to a format of the 3D image, time-divides the processed left and right eye images, and alternately displays the time-divided left and right eye images.

The 3D display apparatus 100 transmits information about the timing of time-dividing and displaying the left and right eye images, respectively, to the 3D glasses 200. In more detail, the 3D display apparatus 100 transmits delay information ranging from a vertical synchronization ("vertical sync" hereinafter) signal Vsync of each of the left and right eye images to a time when the corresponding shutters of the 3D glasses 300 are switched on or off, to the 3D glasses 200. Therefore, the 3D glasses 200 synchronize with output sections of the left and right eye images output from the 3D display apparatus 100 so as to switch on and off left and right eye shutter glasses of the 3D glasses 200.

The 3D display apparatus 100 performing the above-described functions may be realized as a 3D TV, a 3D projection, a 3D monitor, or the like.

The 3D glasses 200 alternately open and close the left and right eye shutter glasses according to the timing information
received from the 3D display apparatus 100 so that a user respectively watches the left and right eye images through left and right eyes of the user.

The 3D display apparatus 100 and the 3D glasses 200 communicate with each other according to a Bluetooth communication method. In more detail, the 3D display apparatus 100 and the 3D glasses 200 may respectively include Bluetooth modules to communicate with each other using an Industrial Scientific Medical (ISM) band of 2.4 GHz.

In the above-described exemplary embodiment, the 3D display apparatus 100 and the 3D glasses 300 communicate with each other according to the Bluetooth communication method, but this is only an example. In other words, besides the Bluetooth communication method, the 3D display apparatus 100 and the 3D glasses 200 may communicate with each other using an infrared communication method, a Zigbee communication method and various types of wireless communication methods of forming communication channels in near fields to transmit and receive signals.

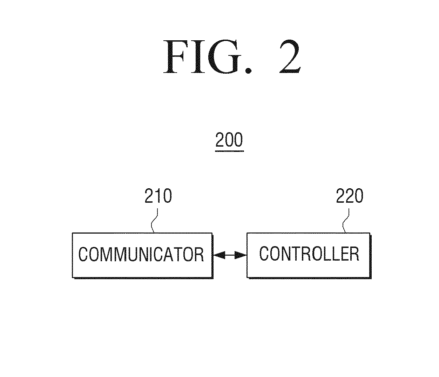

The 3D display apparatus 100 and the 3D glasses 200 are to perform pairing in order to communicate with each other according to the Bluetooth communication method. Also, the 3D glasses 200 according to the present exemplary embodiment may automatically perform pairing with the 3D display apparatus 100 with which the 3D glasses 200 have not performed pairing. The 3D glasses 200 will now be described in more detail with reference to FIG. 2.

FIG. 2 is a block diagram illustrating a structure of 3D glasses 200 according to an exemplary embodiment. Referring to FIG. 2, the 3D glasses 200 include a communicator 210 and a controller 220.

If a preset event occurs, the communicator 210 receives a transmission packet for driving the 3D glasses 200 from a 3D display apparatus. Here, the preset event may be an event which is to turn on power of the 3D glasses 200.

In more detail, the communicator 210 includes a Bluetooth module. Therefore, if the power of the 3D glasses 200 is turned on, the communicator 210 may search for a 3D display apparatus with which pairing was performed in the past and perform a near field communication (NFC) with the 3D display apparatus in order to receive a transmission packet for driving the 3D glasses 200.

For this purpose, the 3D display apparatus may transmit the transmission packet to the 3D glasses 200 with which pairing was performed in the past, for a predetermined time from a time when power of the 3D display apparatus is turned on. Here, the predetermined time for which the 3D display apparatus transmits the transmission packet may be about 2 minutes, for example.

However, if a 3D display apparatus with which pairing was performed in the past does not exist in a range in which an NFC may be performed with the communicator 210 according to the Bluetooth communication method, the communicator 210 may automatically perform pairing with a 3D display apparatus which exists in a Bluetooth communication range.

The controller 220 controls an overall operation of the 3D glasses 200. In particular, the controller 220 may control the communicator 210 to automatically perform pairing with the 3D display apparatus.

In more detail, if the transmission packet for driving the 3D glasses 200 is not received, the controller 220 may control the communicator 210 to automatically perform pairing with the 3D display apparatus. In this case, the controller 220 may control the communicator 210 to determine whether the transmission packet has been received for a preset time and, if the transmission packet for the driving the 3D glasses 200 has not been received, automatically perform pairing with the 3D display apparatus.

In other words, if a 3D display apparatus with which pairing was performed in the past does not exist in the Bluetooth communication range, and thus a transmission packet for driving the 3D glasses 200 is not received from the 3D display apparatus, the controller 220 may control the communicator 210 to automatically perform pairing with a new 3D display apparatus which exists in the Bluetooth communication range.

Here, pairing may be performed through an authentication process, a personal identification number (PIN) code, an encryption process, or the like. The authentication process is a process of setting whether to exchange a PIN code (a packet) for a connection to another Bluetooth device. The PIN code corresponds to a kind of password, and may involve a process of making PIN codes consistent (e.g., equal) between Bluetooth devices. The encryption process is a process of encrypting data exchanged between Bluetooth devices.

In other words, the controller 220 broadcasts an inquiry message through the communicator 210 to search for a 3D display apparatus which exists in a Bluetooth communication range. If a response to the inquire message is received from the 3D display apparatus, the controller 220 may transmit and receive a Bluetooth device address and a PIN code with the 3D display apparatus to perform a pairing operation.

Here, even if a user does not directly input a PIN code, the controller 220 may automatically generate a PIN code in order to register the 3D display apparatus in order to perform the pairing operation. However, the present inventive concept is not limited thereto, and the user may directly input the PIN code of the 3D display apparatus to perform the pairing operation.

When performing the pairing operation, the controller 220 may control the communicator 210 to acquire received signal strength indications (RSSIs) from a plurality of 3D display apparatuses and automatically perform pairing with one of the plurality of 3D display apparatuses having the largest RSSI.

In more detail, if the controller 220 searches a plurality of 3D display apparatuses during a process of searching for a 3D display apparatus existing in a Bluetooth communication range, the controller 220 may receive and acquire RSSIs from the plurality of 3D display apparatuses, respectively.

Here, an RSSI may be sensed through a path between Bluetooth communication devices if the Bluetooth communication devices communicate with each other. Therefore, the controller 220 may determine a 3D display apparatus which is nearest to the 3D glasses 200 based on the acquired RSSIs.

Also, the controller 220 may automatically perform pairing with the 3D display apparatus having the largest RSSI (i.e., the RSSI value which is greatest from among the RSSI values of all of the devices found) and thus operates with the 3D display apparatus which is nearest to the 3D glasses 200.

If the pairing is completed, the controller 220 may receive a transmission packet from the 3D display apparatus to drive shutters of the 3D glasses 200.

Here, the transmission packet for driving the 3D glasses 200 may include timing information related to a time when the shutters of the 3D glasses 200 are switched on or off. In more detail, the timing information may be delay information ranging from a standard time, which is determined to exist between the 3D display apparatus and the 3D glasses 200, to the time when the shutters of the 3D glasses 200 are switched on or off.

Therefore, the controller 220 may acquire the timing information related to the time when the shutters of the 3D glasses 200 are switched on or off, from the transmission packet and switch on/off left and right eye shutter glasses according to the timing information.

For example, if the standard time determined between the 3D display apparatus and the 3D glasses 200 is based on respective vertical sync signals for left and right eye images output from the 3D display apparatus, the controller 220 may switch on and off the left eye shutter glass at a time when 0 ms and 16.682 ms elapse from the vertical sync signal of the left eye image and switch on and off the right eye shutter glass at a time when 16.683 ms and 33.365 ms elapse from the vertical sync signal of the right eye image according to the timing information acquired from the transmission packet.

Accordingly, the left and right eye shutter glasses of the 3D glasses 200 synchronize with output sections of left and right eye images output from the 3D display apparatus and thus are switched on and off. Therefore, a 3D image may be provided to the user.

If the RSSI acquired from the 3D display apparatus which has transmitted the transmission packet is smaller than a preset threshold value, the controller 220 may control the communicator 210 to automatically perform a pairing with another 3D display apparatus.

In more detail, if a 3D display apparatus with which pairing was performed in the past exists in an NFC range, the controller 220 may perform an NFC with the 3D display apparatus to receive a transmission packet for driving the 3D glasses 200 from the 3D display apparatus. In this case, the controller 220 may also receive information about an RSSI from the 3D display apparatus which has transmitted the transmission packet. If the RSSI received from the 3D display apparatus is smaller than a preset threshold value, the controller 220 may control the communicator 210 to cancel a connection to the 3D display apparatus and automatically perform a pairing with another 3D display apparatus. Here, the preset threshold value may be set by the user or predetermined.

In other words, the controller 220 may cancel a connection to a 3D display apparatus with which pairing was performed in the past and thus an NFC is possible without an additional pairing process but which exists at a slightly distant position to watch a 3D image and automatically perform pairing with a 3D display apparatus which exists in an appropriate position to watch a 3D image.

If the transmission packet is not received, the controller 220 may control the communicator 210 to request the transmission packet from the 3D display apparatus, and receive the transmission packet for driving the 3D glasses 200 from the 3D display apparatus in response to the request for the transmission packet to drive the shutters of the 3D glasses 200.

In other words, if a 3D display apparatus with which pairing was performed in the past is searched in a range in which an NFC may be performed with the communicator 210 according to a Bluetooth communication method, but a transmission packet is not received from the searched 3D display apparatus, the controller 220 may control the communicator 210 to request the transmission packet from the searched 3D display apparatus.

Also, a 3D display apparatus according to an exemplary embodiment transmits a transmission packet to 3D glasses with which pairing was performed in the past for a predetermined time from a time when power of the 3D display apparatus is turned on. Therefore, if a predetermined time elapses from the time when the power of the 3D display apparatus is turned on, the controller 220 requests the 3D display apparatus to transmit the transmission packet.

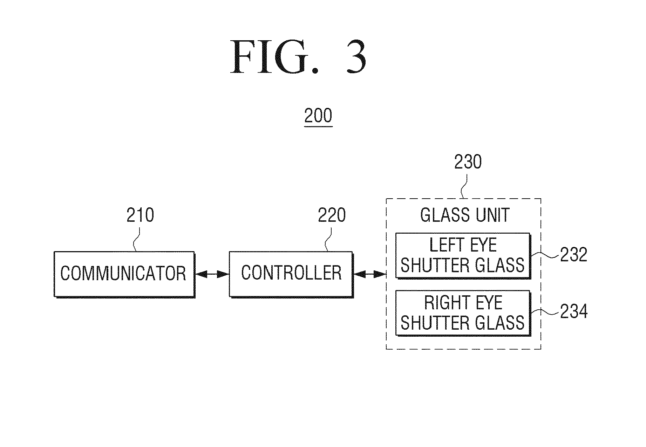

FIG. 3 is a block diagram illustrating a detailed structure of 3D glasses 200 according to an exemplary embodiment. Referring to FIG. 3, the 3D glasses 200 include a communicator 210, a controller 220, and a glass unit 230. The same reference numerals of FIG. 3 as those of FIG. 2 denote the same elements, and thus their detailed descriptions will be omitted.

The controller 220 respectively generates a left eye shutter driving signal for driving a shutter of a left eye shutter glass 232 and a right eye shutter driving signal for driving a shutter of a right eye shutter glass 234, and transmits the left eye shutter driving signal to the left eye shutter glass 232 and the right eye shutter driving signal to the right eye shutter glass 234.

In more detail, the controller 220 may acquire timing information related to a time when the shutters of the 3D glasses 200 are switched on or off, from a transmission packet received from a 3D display apparatus and generate the left and right eye shutter driving signals according to the timing information.

The glass unit 230 includes the left eye shutter glass 232 and the right eye shutter glass 234 and respectively opens and closes the left and right eye shutter glasses 232 and 234 according to the left and right eye shutter driving signals received from the controller 220.

The shutters of the left and right eye shutter glasses 232 and 234 may be realized using liquid crystals. In other words, the glass unit 230 may open and close the shutters using the liquid crystals of the left and right eye shutter glasses 232 and 234.

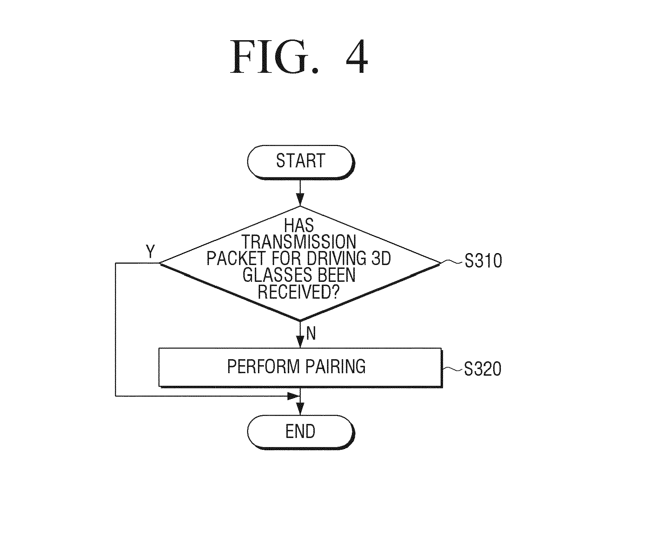

FIG. 4 is a flowchart illustrating a method for pairing of 3D glasses according to an exemplary embodiment. The 3D glasses according to the present exemplary embodiment may communicate with a 3D display apparatus according to a Bluetooth communication method.

If a preset event occurs, a determination is made as to whether a transmission packet for driving the 3D glasses has been received from the 3D display apparatus in operation S310. Here, the preset event may be an event which is to turn on power of the 3D glasses.

If it is determined in operation S310 that the transmission packet has not been received from the 3D display apparatus, pairing is automatically performed with the 3D display apparatus in operation S320. In other words, if there is no 3D display apparatus with which pairing was performed in the past according to the Bluetooth communication method (e.g., no such 3D display apparatus exists within communication range), pairing is automatically performed with a 3D display apparatus which exists in a range in which an NFC may be performed according to the Bluetooth communication method.

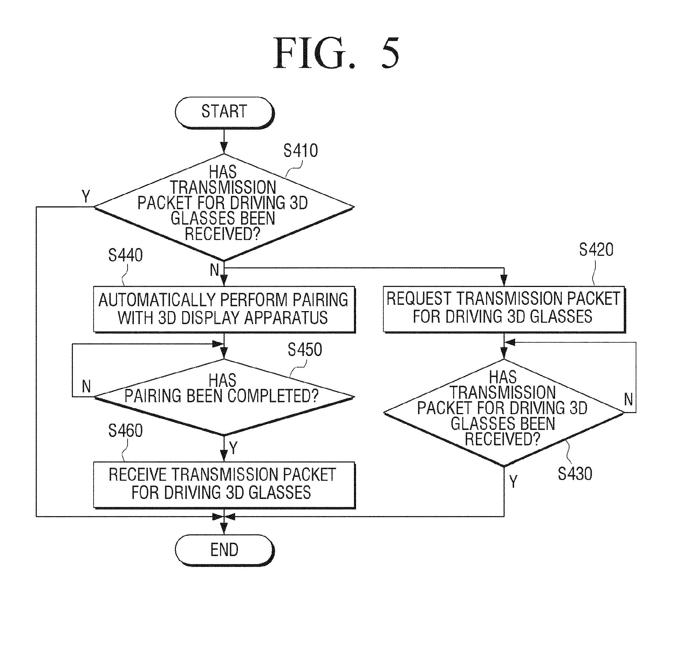

A method for pairing of 3D glasses according to an exemplary embodiment will now be described in more detail with reference to FIG. 5.

FIG. 5 is a flowchart illustrating a method for pairing of 3D glasses according to an exemplary embodiment.

If a preset event occurs, a determination is made as to whether a transmission packet for driving the 3D glasses has been received from a 3D display apparatus in operation S410. Here, the preset event may be an event which is to turn on power of the 3D glasses.

In more detail, a 3D display apparatus with which pairing was performed in the past according to a Bluetooth communication method is searched. If the 3D display apparatus with which pairing was performed in the past is detected, an NFC is performed to receive a transmission packet for driving the 3D glasses (S410-Y).

If it is determined in operation S410 that the transmission packet has not been received from the 3D display apparatus, the transmission packet is requested from the 3D display apparatus in operation S420. The transmission packet for driving the 3D glasses is received from the 3D display apparatus in response to the request for the transmission packet (S430-Y) to drive shutters of the 3D glasses.

In other words, if a 3D display apparatus with which pairing was performed in the past according to the Bluetooth communication method is searched but a transmission packet is not received from the searched 3D display apparatus, a request for a transmission of the transmission packet is made to the 3D display apparatus so as to receive the transmission packet for driving the 3D glasses.

If it is determined in operation S410 that the transmission packet has not been received from the 3D display apparatus, pairing is automatically performed with the 3D display apparatus in operation S440.

In other words, if there does not exist a 3D display apparatus with which pairing was performed in the past according to the Bluetooth communication method, pairing is automatically performed with a new 3D display apparatus which exists in a Bluetooth communication range.

In operation S450, a determination is made as to whether the pairing has been completed. If it is determined in operation S450 that the pairing has been completed, the transmission packet is received from the 3D display apparatus to drive the shutters of the 3D glasses in operation S460.

The transmission packet received from the 3D display apparatus in operations S430 and 460 includes timing information related to a time when the shutters of the 3D glasses are switched on or off. The timing information may be delay information ranging from a standard time, which is determined to exist between the 3D display apparatus and the 3D glasses, to the time when the respective shutters of the 3D glasses are switched on or off.

In operations S410 and S430, whether the transmission packet has been received for a preset time may be determined.

When performing the pairing in operation S450, RSSIs may be acquired from a plurality of 3D display apparatuses, and pairing may be automatically performed with the one of the plurality of 3D display apparatuses having the largest RSSI.

If an RSSI acquired from the 3D display apparatus which has transmitted the transmission packet is smaller than a preset threshold value in operation S410, pairing may be automatically performed with another 3D display apparatus.

In other words, a connection may be cancelled with respect to a 3D display apparatus with which pairing was performed in the past and thus an NFC is possible without an additional pairing process but which exists in a slightly distant position to watch a 3D image, and pairing may be automatically performed with a 3D display apparatus which exits in an appropriate position to watch a 3D image.

According to the above-described method, 3D glasses may perform a pairing operation with a 3D display apparatus without an additional manipulation of a user for entering a pairing mode, to be connected to the 3D display apparatus. Therefore, the convenience of the user may be increased.

The present inventive concept can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion.

The foregoing exemplary embodiments are merely exemplary and are not to be construed as limiting the present invention as defined by the claims. It should be noted that the exemplary embodiments can be readily applied to other types of apparatuses.

## Claims

1. A method of pairing of glasses with a display apparatus, the method comprising:
if a preset event occurs, determining whether a transmission packet for driving the glasses has been received from the display apparatus; and
if it is determined that the transmission packet has not been received, automatically performing the pairing of the glasses with the display apparatus.

2. The method as claimed in claim 1, wherein the glasses use a shutter glass method, and the transmission packet comprises timing information relating to when shutters of the glasses are switched on or off.

3. The method as claimed in claim 2, further comprising determining a standard time between the display apparatus and the glasses, wherein the timing information is delay information ranging from the standard time to a time when the shutters of the glasses are switched on or off.

4. The method as claimed in any one of claims 1 to 3, wherein the preset event is an event to turn on power to the glasses.

5. The method as claimed in any one of claims 1 to 4, further comprising determining whether the transmission packet has been received for a preset time.

6. The method as claimed in any one of claims 1 to 5, further comprising:
if the pairing is completed, receiving the transmission packet from the display apparatus to drive the shutters of the glasses.

7. The method as claimed in any one of claims 1 to 6, further comprising:
if it is determined that the transmission packet has not been received, requesting the transmission packet from the display apparatus; and
receiving the transmission packet for driving the glasses from the display apparatus in response to the request for the transmission packet to drive the shutters of the glasses.

8. The method as claimed in anyone of claims 1 to 7, further comprising:
acquiring a received signal strength indication (RSSI) from the display apparatus; and
if the RSSI acquired from the display apparatus is smaller than a preset threshold value, automatically performing another pairing with another display apparatus.

9. The method as claimed in any one of claims 1 to 8, wherein the performing the pairing comprises:
acquiring received signal strength indications (RSSIs) from a plurality of display apparatuses and automatically performing pairing with one of the plurality of display apparatuses having the largest RSSI.

10. Glasses for viewing a display apparatus, the glasses comprising:
a communicator which, if a preset event occurs, is configured to receive a transmission packet for driving the glasses from the display apparatus; and
a controller which, if the transmission packet is not received, is arranged to control the communicator to automatically perform pairing of the glasses with the display apparatus.

11. The glasses as claimed in claim 10, further comprising shutters,
wherein the transmission packet comprises timing information related to when the shutters of the glasses are switched on or off.

12. The glasses as claimed in claim 11, wherein the timing information is delay information ranging from a standard time, which is determined between the display apparatus and the glasses, to a time when the shutters of the glasses are switched on or off.

13. The glasses as claimed in any one of claims 10 to 12, wherein the preset event is an event to turn on power to the glasses.

14. The glasses as claimed in any one of claims 10 to 13, wherein the controller controls the communicator to determine whether the transmission packet has been received for a preset time and, if the transmission packet is not received, automatically perform the pairing of the glasses with the display apparatus.

15. The glasses as claimed in any one of claims 10 to 14, wherein if the pairing is completed, the controller receives the transmission packet from the display apparatus to drive the shutters of the glasses.
